# EUROPÄISCHE PATENTSCHRIFT

(11) **EP 1 662 248 B1**
(45) Veröffentlichungstag und Bekanntmachung des Hinweises auf die Patenterteilung: **21.01.2009**
(21) Anmeldenummer: 05021218.2
(22) Anmeldetag: 28.09.2005
(51) Int. Cl.: G01N 17/00

(54) **Strahlungsquellen-Aufnahmeeinheit für ein Bewitterungsgerät**
Weathering apparatus radiation-source holder
Support de source de rayonnement pour un appareil de résistance aux intempéries

(30) Priorität: 17.11.2004 DE 202004017833 U
(43) Veröffentlichungstag der Anmeldung: 31.05.2006
(73) Patentinhaber: Atlas Material Testing Technology GmbH, 63589 Linsengericht/Altenhasslau (DE)
(72) Erfinder: March, Peter, 60326 Frankfurt am Main (DE); Börner, Bernhard, 63579 Freigericht (DE)
(74) Vertreter: Patentanwälte Lambsdorff & Lange

(56) Entgegenhaltungen:
- DE-A1- 10 000 770
- DE-A1- 10 155 245
- DE-A1- 19 933 768
- DE-U1- 9 100 816
- DE-U1- 29 901 814

## Beschreibung

Die vorliegende Erfindung betrifft eine Strahlungsquellen-Aufnahmeeinheit für ein Bewitterungsgerät und ein entsprechend ausgebildetes Bewitterungsgerät. In derartigen Bewitterungsgeräten wird eine Bewertung des witterungsbedingten Alterungsverhaltens einer Probe, insbesondere einer flächigen Werkstoffprobe, durchgeführt, wobei die Probe einer künstlichen Bewitterung ausgesetzt wird. Derartige Vorrichtungen weisen zu diesem Zweck üblicherweise eine Bewitterungskammer auf, in welcher Halterungsmittel für die Halterung von zu bewitternden Proben und eine Strahlungsquelle zur Beaufschlagung der Proben mit Strahlung, insbesondere mit UV-Strahlung, angeordnet sind.

In Bewitterungsgeräten soll zumeist die Lebensdauer von Werkstoffen abgeschätzt werden, die in ihrer Anwendung ständig den natürlichen Wetterverhältnissen ausgesetzt sind und sich somit unter klimatischen Einflüssen wie Sonnenlicht, Sonnenwärme, Feuchtigkeit und dergleichen verschlechtern. Um eine gute Simulation der natürlichen Witterungsgegebenheiten zu erhalten, ist es von Vorteil, wenn die spektrale Energieverteilung des in der Vorrichtung erzeugten Lichtes möglichst derjenigen der natürlichen Sonnenstrahlung entspricht, aus welchem Grund in solchen Geräten als Strahlungsquelle oftmals Xenon-Strahler eingesetzt werden. Zusätzlich wird eine zeitraffende Alterungsprüfung der Werkstoffe im Wesentlichen durch eine gegenüber den natürlichen Verhältnissen stark intensivierte Bestrahlung der Proben erzielt, wodurch die Alterung der Proben beschleunigt wird. Somit lässt sich nach verhältnismäßig kurzer Zeit eine Aussage über das Langzeit-Alterungsverhalten einer Werkstoffprobe machen.

Ein Großteil der in solchen Bewitterungsgeräten untersuchten Werkstoffproben besteht aus polymeren Werkstoffen. Bei diesen wird die witterungsbedingte Verschlechterung im Wesentlichen durch den UV-Anteil der Sonnenstrahlung hervorgerufen. Die dabei ablaufenden fotochemischen Primärprozesse, also die Absorption von Photonen und die Erzeugung angeregter Zustände oder freier Radikale, sind temperaturunabhängig. Dagegen können die nachfolgenden Reaktionsschritte mit den Polymeren oder Additiven temperaturabhängig sein, sodass die beobachtete Alterung der Werkstoffe ebenfalls temperaturabhängig ist.

In den bisher bekannten Bewitterungsgeräten werden üblicherweise eine oder mehrere UV-Strahlungsquellen wie Xenon-Strahlungsquellen eingesetzt. Mit diesen kann bekanntermaßen das Sonnenspektrum recht gut simuliert werden. Es können aber ebenso Halogenlampen wie Metallhalogenlampen, Fluoreszenzlampen oder auch UV-LEDs eingesetzt werden.

In jedem Bewitterungsgerät muss von Zeit zu Zeit die oder eine Strahlungsquelle ausgetauscht werden. In konventionellen Bewitterungsgeräten ist dies ein relativ umständlicher und mühevoller Prozess, da die Strahlungsquelle innerhalb der Bewitterungskammer an der dafür vorgesehenen Stelle eingesetzt und elektrisch kontaktiert werden muss. Dies ist insbesondere dann relativ schwierig, wenn die Strahlungsquelle ein Xenon-Strahler ist, welcher durch einen länglichen, mit Xenongas gefüllten Glaskolben gegeben ist. Zum Einsetzen oder Auswechseln der Strahlungsquelle ist die Bewitterungskammer zu öffnen und unter den relativ beengten räumlichen Verhältnissen innerhalb der Bewitterungskammer ist dann die auszuwechselnde Strahlungsquelle zu demontieren und die neue Strahlungsquelle an deren Stelle einzusetzen und elektrisch zu kontaktieren, wofür zumindest einige Übung erforderlich ist. Dasselbe gilt auch für Strahlungsfilter, die vor die Strahlungsquelle in dafür geeignete Halterungsvorrichtungen einzusetzen sind. Auch diese müssen direkt in die Bewitterungskammer manuell eingebracht werden.

Die Druckschrift DE 91 00 816 U1 beschreibt eine Bestrahlungsvorrichtung zur Sonnensimulation, welche eine Aufnahmeeinheit für die Aufnahme und Halterung einer Strahlungsquelle für die Bestrahlungsvorrichtung enthält. Die Aufnahmeeinheit kann auf Schienen in einen Hohlraum der Bestrahlungsvorrichtung eingeschoben werden.

Es ist demgemäß Aufgabe der vorliegenden Erfindung, ein Bewitterungsgerät zu schaffen, bei welchem die Strahlungsquellen einfacher und handlicher eingesetzt und ersetzt werden können.

Diese Aufgabe wird mit den Merkmalen des Patentanspruchs 1 gelöst. Vorteilhafte Weiterbildungen und Ausgestaltungen sind Gegenstand von Unteransprüchen.

Die Erfindung umfasst eine Strahlungsquellen-Aufnahmeeinheit zur Aufnahme und Halterung einer Strahlungsquelle für ein Bewitterungsgerät. Die Aufnahmeeinheit ist derart ausgebildet, dass sie von außen in ein Bewitterungsgerät in einen dafür vorgesehenen Hohlraum einschiebbar ist.

Die Aufnahmeeinheit wird in die dafür vorgesehene Öffnung des Bewitterungsgeräts eingeschoben und bis zu einer Endposition vorgeschoben, in welcher die in der Aufnahmeeinheit montierte Strahlungsquelle in der gewünschten Ausrichtung hinsichtlich der zu bestrahlenden Proben vorliegt, sodass das Bewitterungsgerät unmittelbar danach eingeschaltet werden kann.

Dadurch dass die Aufnahmeeinheit unabhängig von dem Bewitterungsgerät selbständig handhabbar ist, wird der Vorgang des Einsetzens oder Auswechselns der Strahlungsquellen erheblich erleichtert. Die Aufnahmeeinheit braucht zu diesem Zweck lediglich aus dem Bewitterungsgerät herausgezogen werden und anschließend kann unter jeder denkbaren und wählbaren Umgebungs- oder Beleuchtungsbedingung eine Strahlungsquelle in die Aufnahmeeinheit eingesetzt und elektrisch kontaktiert werden oder eine Strahlungsquelle aus der Aufnahmeeinheit entnommen und durch eine andere ersetzt werden.

Die Strahlungsquellen-Aufnahmeeinheit weist vorzugsweise ein Gehäuse auf, innerhalb dessen die Strahlungsquelle befestigbar und elektrisch kontaktierbar ist, wobei an einer Seite des Gehäuses zwei elektrische Anschluss-kontakte angebracht sind. Diese elektrischen Anschlusskontakte bilden im eingeschobenen Zustand der Aufnahmeeinheit einen elektrischen Kontakt mit innerhalb des Bewitterungsgeräts vorhandenen Anschlusskontakten, die mit einer elektrischen Leistungsversorgung verbunden sind. Somit wird im eingeschobenen Zustand der Aufnahmeeinheit der elektrische Kontakt bereitgestellt und die in der Aufnahmeeinheit kontaktierte Strahlungsquelle mit Strom versorgt.

Dabei sind die an dem Gehäuse der Aufnahmeeinheit angebrachten elektrischen Anschlusskontakte vorzugsweise durch Anschluss-Stifte oder -Stecker gegeben, die sich ausgehend von der hinteren Seite des Gehäuses entlang einer Richtung erstrecken, die mit der Einschubrichtung der Aufnahmeeinheit übereinstimmt. Innerhalb des Bewitterungsgeräts befinden sich im hinteren Bereich des Hohlraums zwei Anschlussbuchsen, in welche die Anschluss-Stifte beim Einschieben der Aufnahmeeinheit eingesteckt werden. Die Aufnahmeeinheit wird beim Einschieben in geeigneter Weise geführt, damit die Anschluss-Stifte der Aufnahmeeinheit in die Anschlussbuchsen des Bewitterungsgeräts eingesteckt werden. In der Endposition ist die Aufnahmeeinheit vollständig in die Öffnung des Bewitterungsgeräts eingeschoben und die Anschluss-Stifte sind entsprechend in die Anschlussbuchsen eingesteckt. Alternativ dazu können die beiderseitigen Anschlusskontakte auch durch flächig aufgebrachte Kontakte gegeben sein.

An der vorderen Seite der Aufnahmeeinheit ist vorzugsweise ein Griff zum Einschieben der Aufnahmeeinheit in das Bewitterungsgerät und zum Herausziehen der Aufnahmeeinheit aus dem Bewitterungsgerät angebracht. Im herausgezogenen Zustand kann der Griff zusammen mit der seitlichen Gehäusefläche abmontiert werden, um die Strahlungsquelle und gegebenenfalls Strahlungsfilter an dieser Seite längs aus der Aufnahmeeinheit herauszuziehen und auszutauschen.

In die Aufnahmeeinheit kann zusätzlich ein Strahlungsreflektor integriert sein, der beispielsweise aus einem Aluminiumblech gegeben ist und die von der Strahlungsquelle emittierte Strahlung optimal in Richtung auf die innerhalb des Bewitterungsgeräts angeordneten Proben reflektiert.

Die Strahlungsquelle kann durch eine Xenonlampe, eine (Metall-)Halogenlampe, eine Fluoreszenzlampe oder auch eine oder mehrere UV-LEDs gegeben sein.

Das Gehäuse der Aufnahmeeinheit ist insbesondere kastenförmig ausgebildet und weist somit eine Bodenplatte und daran angebrachte Seitenwände auf. Darin kann der Strahlungsreflektor als gebogene metallische Lage innerhalb des Gehäusekastens befestigt sein und die Strahlungsquelle kann innerhalb der Symmetrieebene des Strahlungsreflektors zu liegen kommen. Die Strahlungsquelle kann beispielsweise durch einen Xenon-Strahler gegeben sein, welcher in Form eines länglichen, mit Xenongas gefüllten Glaskolbens vorliegt. In diesem Fall ist das Gehäuse ebenfalls von länglicher Form, wobei der Strahlungsreflektor darin angeordnet ist und der Xenon-Strahler auf der Symmetrieachse des Strahlungsreflektors zu liegen kommt.

In vorteilhafter Weise kann noch vorgesehen sein, dass an einem Abschnitt des Gehäuses ein Strahlungsfilter einsetzbar ist. Beispielsweise können an zwei gegenüberliegenden Seitenwänden des Gehäusekastens Führungsnuten zur Aufnahme des Strahlungsfilters angeformt sein. In diese Führungsnuten kann der Strahlungsfilter von einem Ende her eingeschoben werden. Diese Führungsnuten für den Strahlungsfilter können noch weiterhin so ausgebildet sein, dass sie gleichzeitig der Führung der Aufnahmeeinheit beim Einschieben in die Öffnung des Bewitterungsgeräts dienen. Sie können beispielsweise durch nach außen geformte Bleche an beiden gegenüberliegenden Gehäuseseiten gebildet sein, auf deren Innenseiten der Strahlungsfilter eingeschoben wird und die durch ihre Außenkonturen Führungsschienen bilden, die von Führungselementen in dem Hohlraum des Bewitterungsgeräts geführt werden.

Da die meisten Strahlungsquellen in Bewitterungsgeräten Wärme erzeugen, wird üblicherweise Kühlungsluft zur Abfuhr der Wärme zu den Strahlungsquellen geleitet. Zu diesem Zweck kann vorgesehen sein, dass die Bodenplatte des Gehäusekastens mindestens eines Lufteintrittsöffnung und eine Luftaustrittsöffnung für den Durchtritt von Kühlungsluft aufweist. Die Lufteintrittsöffnung befindet sich an einem Ende der Bodenplatte, während sich die Luftaustrittsöffnung an dem anderen Ende der Bodenplatte befindet. Für den Fall einer länglich geformten Strahlungsquelle kann somit Kühlungsluft an dem einen Ende der Strahlungsquelle eingeleitet werden und entlang der Strahlungsquelle zu ihrem anderen Ende gelangen, von wo sie durch eine Luftaustrittsöffnung wieder abgesaugt wird. Es kann ferner vorgesehen sein, dass zwei Lufteintrittsöffnungen in der Bodenplatte vorgesehen sind, wobei durch eine Lufteintrittsöffnung die Kühlungsluft direkt zu der Strahlungsquelle gelangt und entlang der Strahlungsquelle zu der Luftaustrittsöffnung strömt, und durch die andere Lufteintrittsöffnung die Kühlungsluft in den Zwischenraum zwischen dem Strahlungsreflektor und der Gehäusewand strömt und entlang dem Strahlungsreflektor zu der Luftaustrittsöffnung gelangt.

Die Erfindung bezieht sich auf ein Bewitterungsgerät, in welches mindestens eine Strahlungsquellen-Aufnahmeeinheit der vorbeschriebenen Art einschiebbar ist. Zu diesem Zweck weist das Bewitterungsgerät einen Hohlraum auf, welcher derart dimensioniert ist, dass er die Aufnahmeeinheit derart aufnehmen kann, dass sie in ihm positionsfest und raumfüllend gehaltert ist. Der Hohlraum ist nach außen offen, sodass die Aufnahmeeinheit in ihn eingeschoben werden kann.

An der der Einschuböffnung gegenüberliegenden inneren Wand des Hohlraums des Bewitterungsgeräts befinden sich vorzugsweise die zwei elektrischen Anschlusskontakte des Bewitterungsgeräts, die weiterhin vorzugsweise als Anschlussbuchsen ausgebildet sind, in welche die äußeren Anschluss-Stifte der Aufnahmeeinheit eingesteckt werden können.

Ferner weist das Bewitterungsgerät vorzugsweise ein Luftkühlungssystem auf, durch welches Kühlungsluft an einem Ende in den Hohlraum in die darin eingesetzte Aufnahmeeinheit eingeleitet und an einem anderen Ende des Hohlraums aus der darin eingesetzten Aufnahmeeinheit entweichen kann.

Im Folgenden werden die Aufnahmeeinheit und das Bewitterungsgerät anhand eines Ausführungsbeispiels im Zusammenhang mit den Zeichnungsfiguren näher erläutert. Es zeigen:
- Fig. 1a: eine Aufnahmeeinheit in einer Draufsicht;
- Fig. 1b: die Aufnahmeeinheit in einem Querschnitt entlang der Linie A-A der Fig. 1a;
- Fig. 1c: die Aufnahmeeinheit.in einer perspektivischen Ansicht schräg von unten zur Erläuterung der Demontage des Griffteils;
- Fig. 1d: die Aufnahmeeinheit in einer perspektivischen Ansicht schräg von unten mit demontiertem Griffteil;
- Fig. 1e: die Aufnahmeeinheit in einer Ansicht schräg von unten zur Erläuterung des Einschiebens zweier Strahlungsfilter; und
- Fig. 2: ein Ausführungsbeispiel für ein Bewitterungsgerät mit einem Hohlraum für den Einsatz einer Aufnahmeeinheit.

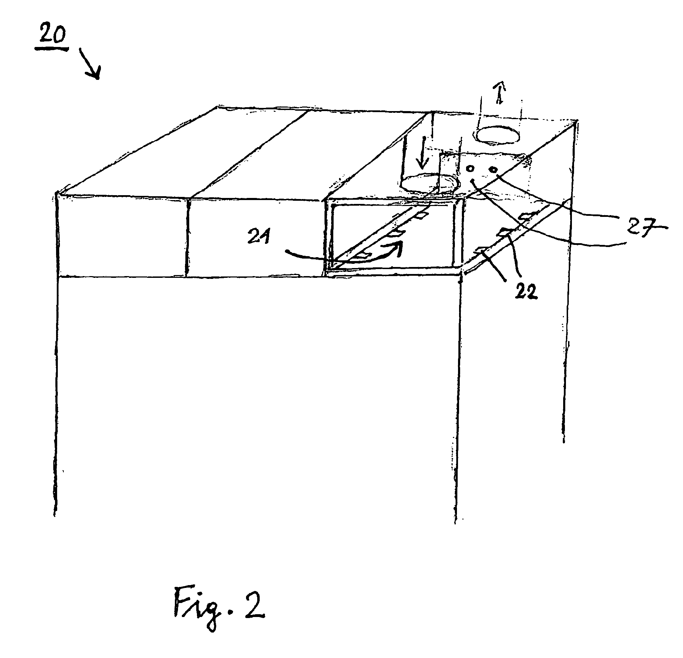

Es sei angemerkt, dass die Begriffe oben und unten bei der Aufnahmeeinheit sich auf den Zustand beziehen, in welchem die Aufnahmeeinheit in das Bewitterungsgerät der Fig. 2 eingesetzt ist.

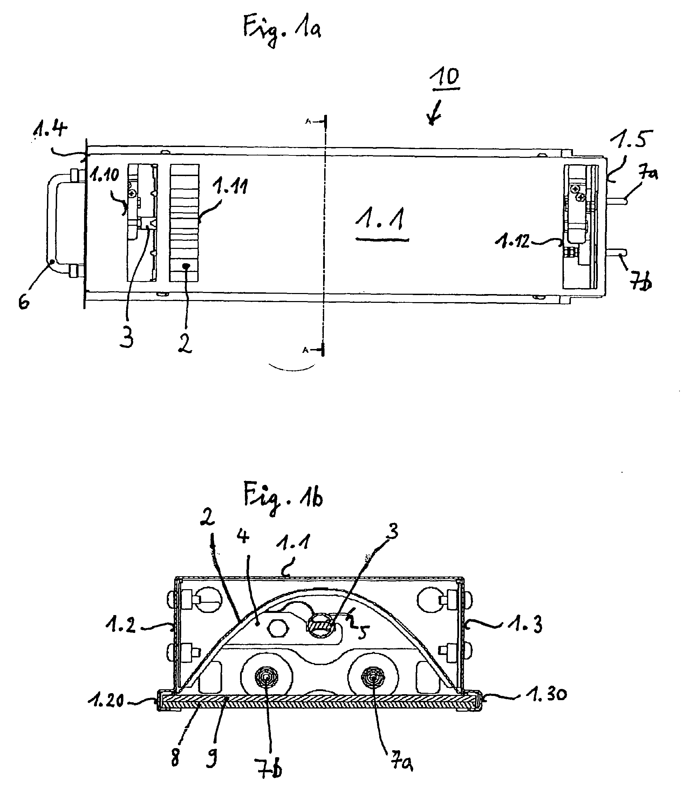

In den Figuren 1a bis 1e sind jeweils für gleiche Bauteile der Aufnahmeeinheit gleiche Bezugszeichen verwendet worden.

In dem Querschnitt der Fig. 1b ist das kastenförmige Gehäuse der Aufnahmeeinheit 10 zu sehen, welches eine Bodenwand 1.1 und Seitenwände 1.2 und 1.3 aufweist. Die Bodenwand 1.1 befindet sich oben, sodass sie in der Draufsicht der Fig. 1a vollständig zu sehen ist. Sie weist an ihrem vorderen Ende zwei Lufteintrittsöffnungen 1.10 und 1.11 auf, durch die Kühlungsluft in den Innenbereich der Aufnahmeeinheit 10 bzw. des Gehäuses der Aufnahmeeinheit eingeleitet wird. In der Fig. 2 ist angedeutet, wie durch ein nicht dargestelltes Luftkühlungssystem des Bewitterungsgeräts 20 die Kühlungsluft am vorderen Ende des Hohlraums 21 in diesen und somit in die zwei Lufteintrittsöffnungen 1.10 und 1.11 der Aufnahmeeinheit 10 eingeleitet wird. Durch die Lufteintrittsöffnung 1.10 wird die Kühlungsluft unmittelbar der Strahlungsquelle 3 zugeführt, von der in der Fig. 1a nur ein vorderer Abschnitt durch die Lufteintrittsöffnung 1.10 zu sehen ist. Durch die Lufteintrittsöffnung 1.11 wird die Kühlungsluft hingegen auf den Strahlungsreflektor 2 geleitet, von welchem ebenfalls in der Fig. 1a ebenfalls nur ein Abschnitt durch die Lufteintrittsöffnung 1.11 zu sehen ist. An dem hinteren Ende der Bodenwand 1.1 ist eine Luftaustrittsöffnung 1.12 geformt, durch welche die Kühlungsluft ausgeblasen oder durch das Luftkühlungssystem des Bewitterungsgeräts abgesaugt wird, wie erneut in der Fig. 2 angedeutet ist. Dadurch strömt die durch die Lufteintrittsöffnungen 1.10 und 1.11 eingeleitete Kühlungsluft sowohl entlang der Strahlungsquelle 3 als auch entlang dem Strahlungsreflektor 2 bis zu der Luftaustrittsöffnung 1.12, sodass auf diese Weise für eine effiziente Kühlung der Strahlungsquelle 3 und des Strahlungsreflektors 2 gesorgt ist.

In dem dargestellten Ausführungsbeispiel wird die Strahlungsquelle 3 durch eine Xenonlampe gebildet, die in der Form eines langgestreckten, mit Xenongas gefüllten Glaskörpers vorliegt. Die Xenonlampe 3 erstreckt sich innerhalb der Symmetrieebene des Strahlungsreflektors 2, der sich ebenfalls in Längsrichtung der Xenonlampe 3 erstreckt. Im Querschnitt der Fig. 1b kann sich die Xenonlampe 3 beispielsweise - wie dargestellt - im Krümmungsmittelpunkt des Strahlungsreflektors 2 befinden. Sie wird am vorderen und am hinteren Ende durch an der Seitenwand 1.2 des Gehäuses befestigte Kunststoffträger (PTFE) 4 gehaltert, von denen der hintere im Querschnitt der Fig. 1b zu sehen ist. Dort befindet sich auch ein an dem Kunststoffhalter 4 befestigtes Federblech 5, mit welchem die Xenonlampe 3 an ihrem schmalen Abschnitt an ihrem hinteren Ende auf dem Kunststoffhalter 4 festgeklemmt wird.

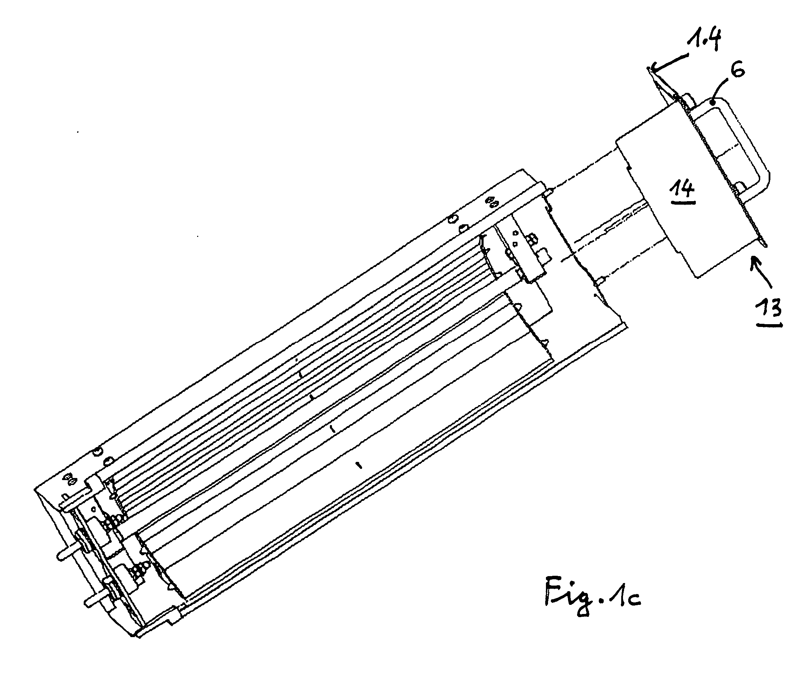

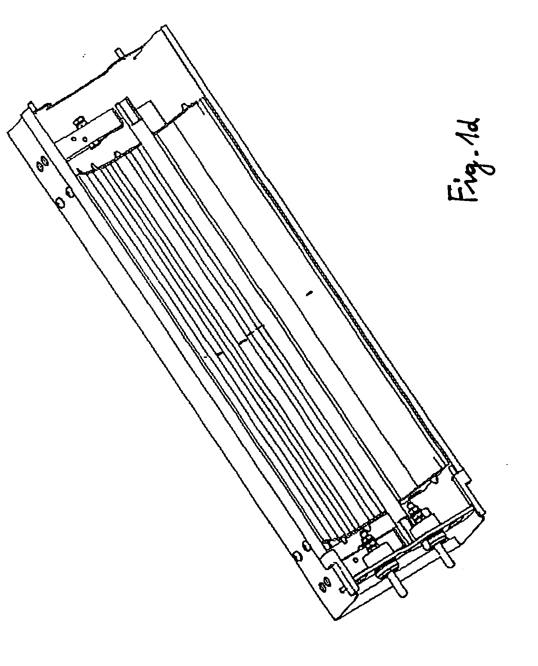

An der vorderen Seitenwand 1.4 des Gehäuses ist ein Griff 6 befestigt, mit welchem die Aufnahmeeinheit in den Hohlraum 21 des Bewitterungsgeräts 20 bis zu ihrer Endposition eingeschoben werden kann und aus dieser wieder herausgezogen werden kann. Wie in der Fig. 1c zu sehen ist, bildet der Griff 6 mit der Seitenwand 1.4 und einem mit dieser rechtwinklig verbundenen unteren Wandabschnitt 14 ein Griffteil 13, der von dem restlichen Teil der Aufnahmeeinheit durch eine Schraubverbindung lösbar ist. Im abgelösten Zustand des Griffteils 13 - wie in Fig. 1d gezeigt - können Strahlungsfilter und/oder eine Xenonlampe eingesetzt oder ausgewechselt werden, wie noch gezeigt werden wird.

Auf der dem Griff 6 und der Seitenwand 1.4 gegenüberliegenden Seite der Aufnahmeeinheit sind an einer Gehäuseseite 1.5 elektrische Anschluss-Stifte 7a und 7b angeordnet, die sich ausgehend von der Gehäuseseite 1.5 in eine Richtung erstrecken, welche mit der Einschubrichtung der Aufnahmeeinheit in das Bewitterungsgerät übereinstimmt. Diese Anschluss-Stifte 7a und 7b sind dafür vorgesehen, um in dem in der Fig. 2 gezeigten Hohlraum 21 des Bewitterungsgeräts 20 in die am hinteren Ende vorgesehenen Anschlussbuchsen 27 eingesteckt zu werden. Die Anschluss-Stifte 7a und 7b werden innerhalb der Aufnahmeeinheit 10 mit Anschlusskontakten am vorderen und am hinteren Ende des Xenon-Strahlers 3 verbunden.

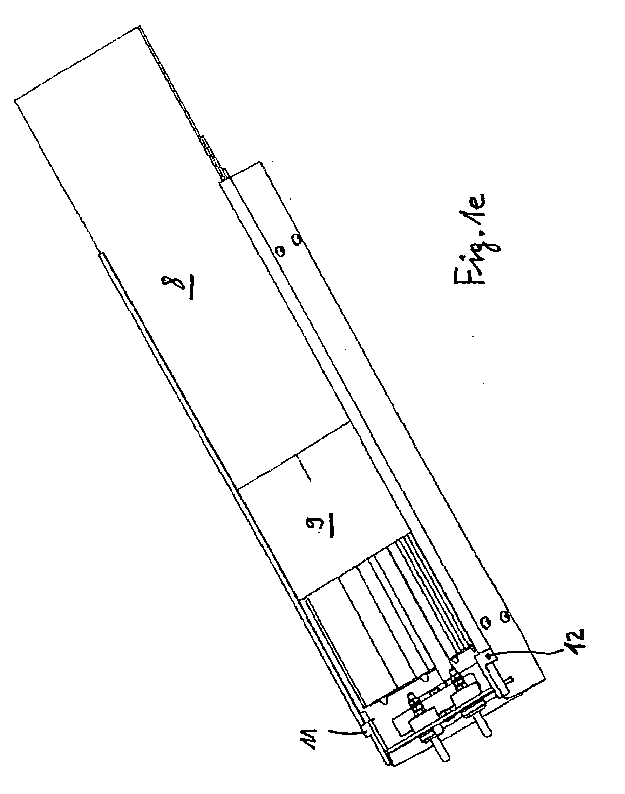

Wie in Fig. 1b zu sehen ist, sind an die Seitenwände 1.2 und 1.3 an ihren unteren Enden Führungsnuten 1.20 und 1.30 angeformt, in welche Strahlungsfilter 8 und 9 eingeschoben werden können. Üblicherweise werden hier Strahlungsfilter eingesetzt, mit welchen der UV-Anteil der von der Xenonlampe 3 emittierten Strahlung spektral verändert oder gefiltert wird. Die Strahlungsfilter können aus modifiziertem Fensterglas gebildet sein oder auch aus Quarzglas oder anderen je nach Norm hergestellten Filtergläsern bestehen. Theoretisch können auch Infrarot-Filtergläser eingeschoben werden, wobei diese in der Praxis jedoch zumeist im Bewitterungsgerät an geeigneter Stelle angebracht werden. In der Fig. 1e sind zwei Strahlungsfilter 8 und 9 im teilweise eingeschobenen Zustand in die Führungsnuten 1.20 und 1.30 dargestellt. Die Führungsnuten sind am hinteren Ende durch Kunststoffstücke (PTFE) 11 und 12 begrenzt, bis zu denen die Strahlungsfilter 8 und 9 vorgeschoben werden. Am vorderen Ende wird dann wieder das Griffteil 13 aufgesteckt und festgeschraubt, wobei der untere Wandabschnitt 14 in die Führungsnuten 1.20 und 1.30 eingeschoben wird und die Strahlungsfilter 8 und 9 solchermaßen vorderseitig begrenzt werden.

Falls entweder der Xenon-Strahler 3 oder die Strahlungsfilter 8 und 9 ausgewechselt werden sollen, wird die Aufnahmeeinheit 10 aus dem Bewitterungsgerät 20 herausgezogen und das Griffteil 13 abgeschraubt. Dann kann der Xenon-Strahler 3 durch Lösen der elektrischen Kontakte und Betätigen des Federblechs 5 gelöst und auf der vorderen Seite der Aufnahmeeinheit 10 herausgezogen werden und durch einen anderen Xenon-Strahler 3 ersetzt werden. In ebensolcher Weise können - falls vorhanden - Strahlungsfilter 8 und 9 aus den Führungsnuten 1.20 und 1.30 herausgezogen und durch andere Strahlungsfilter ersetzt werden. Anschließend wird das Griffteil 13 wieder angeschraubt und die Aufnahmeeinheit 10 kann dann wieder in das Bewitterungsgerät 20 eingeschoben werden.

Die Führungsnuten 1.20 und 1.30 sind derart geformt, dass sie gleichzeitig als Führungsschienen für das Einführen der Aufnahmeeinheit 10 in den Hohlraum 21 des Bewitterungsgeräts 20 dienen. Zu diesem Zweck können an den unteren Seitenrändern des Hohlraums 21 geeignete Führungselemente 22 angeordnet sein, die beispielsweise durch Kunststoffstücke (PTFE) geformt sein können, an denen die Führungsnuten 1.20 und 1.30 entlang laufen.

Das in der Fig. 2 dargestellte Bewitterungsgerät 20 weist drei entsprechend gestaltete Hohlräume auf, in die jeweils eine erfindungsgemäße Aufnahmeeinheit 10 eingeschoben werden kann, sodass das Bewitterungsgerät 20 maximal mit drei Xenon-Strahlern zur Beaufschlagung von Werkstoffproben ausgerüstet werden kann. Durch diese drei Xenon-Strahler wird mit Hilfe der sie jeweils umgebenden Strahlungsreflektoren die Strahlung nach unten emittiert, sodass Werkstoffproben, die auf einer unteren Bodenplatte des Bewitterungsgeräts 20 positioniert werden, räumlich homogen mit Strahlung beaufschlagt werden.

## Patentansprüche

1. Bewitterungsgerät (20), in welches mindestens eine Strahlungsquellen-Aufnahmeeinheit (10) einschiebbar ist,
**gekennzeichnet durch**
einen Hohlraum (21), welcher so dimensioniert ist, dass er die Aufnahmeeinheit (10) raumfüllend aufnimmt, und
eine Strahlungsquellen-Aufnahmeeinheit (10), welche zur Aufnahme und Halterung einer Strahlungsquelle (3) ausgebildet und ferner derart ausgebildet ist, dass sie von außen in den vorgesehenen Hohlraum (21) einschiebbar ist.

2. Bewitterungsgerät (20) nach Anspruch 1, bei welchem der Hohlraum (21) so dimensioniert ist, dass er eine kastenförmige Aufnahmeeinheit (10) aufnimmt.

3. Bewitterungsgerät (20) nach Anspruch 1 oder 2, bei welchem der Hohlraum (21) durch eine Deckenwand, zwei an die Deckenwand angrenzende und sich gegenüberliegende Seitenwände und eine an die Deckenwand und die Seitenwände angrenzende rückseitige Wand begrenzt wird, welche einer Öffnung gegenüberliegt, durch die die Aufnahmeeinheit (10) in den Hohlraum (21) einschiebbar ist.

4. Bewitterungsgerät (20) nach einem der Ansprüche 1 bis 3, mit zwei elektrischen Anschlusskontakten (27), insbesondere Anschlussbuchsen oder -öffnungen, mit welchen die elektrischen Anschlusskontakte (7a, 7b) der Aufnahmeeinheit (10) kontaktierbar, insbesondere in diese einsteckbar, sind.

5. Bewitterungsgerät (20) nach den Ansprüchen 3 und 4, bei welchem
die elektrischen Anschlusskontakte (27) in der rückseitigen Wand angeordnet sind.

6. Bewitterungsgerät (20) nach einem der Ansprüche 1 bis 5, mit einem Luftkühlungssystem, welches so ausgebildet ist, dass Kühlungsluft in die eingeschobene Aufnahmeeinheit (10) eingeleitet werden kann und dass verbrauchte Kühlungsluft entweichen kann oder durch das Luftkühlungssystem abgesaugt werden kann.

7. Bewitterungsgerät (20) nach Anspruch 6, ferner aufweisend eine Lufteintrittsöffnung, welche mit dem Hohlraum (21) in Verbindung steht, und eine Luftaustrittsöffnung, welche mit dem Hohlraum (21) in Verbindung steht.

8. Bewitterungsgerät (20) nach den Ansprüchen 3 und 6, bei welchem die Lufteintrittsöffnung und die Luftaustrittsöffnung in die Deckenwand geformt sind.

9. Bewitterungsgerät (20) nach einem der Ansprüche 1 bis 8,
**dadurch gekennzeichnet, dass**
- die Aufnahmeeinheit (10) ein Gehäuse aufweist, innerhalb dessen die Strahlungsquelle (3) befestigbar und elektrisch kontaktierbar ist, wobei an einer Seite des Gehäuses zwei elektrische Anschlusskontakte (7a, 7b) angebracht sind.

10. Bewitterungsgerät (20) nach Anspruch 9,
**dadurch gekennzeichnet, dass**
- die Anschlusskontakte (7a, 7b) durch Anschluss-Stifte (7a, 7b) gegeben sind, die sich ausgehend von der hinteren Seite des Gehäuses entlang einer Richtung erstrecken, die mit der Einschubrichtung der Aufnahmeeinheit (10) übereinstimmt.

11. Bewitterungsgerät (20) nach einem der Ansprüche 1 bis 10,
**dadurch gekennzeichnet, dass**
- an der vorderen Seite der Aufnahmeeinheit (10) ein Griff (6) zum Einschieben und Herausziehen der Aufnahmeeinheit (10) in das und aus dem Bewitterungsgerät (20) angebracht ist.

12. Bewitterungsgerät (20) nach einem der Ansprüche 1 bis 11,
**dadurch gekennzeichnet, dass**
- in die Aufnahmeeinheit (10) ein Strahlungsreflektor (2) integriert ist.

13. Bewitterungsgerät (20) nach Anspruch 9 oder 10,
**dadurch gekennzeichnet, dass**
- das Gehäuse kastenförmig ausgebildet ist.

14. Bewitterungsgerät (20) nach Anspruch 12,
**dadurch gekennzeichnet, dass**
- der Strahlungsreflektor (2) als eine gebogene metallische Fläche innerhalb des Gehäusekastens befestigt ist und die Strahlungsquelle (3) innerhalb der Symmetrieebene des Strahlungsreflektors (2) zu liegen kommt.

15. Bewitterungsgerät (20) nach Anspruch 9 oder 10,
**dadurch gekennzeichnet, dass**
- an einem Abschnitt des Gehäuses ein Strahlungsfilter (8, 9) einsetzbar ist.

## Claims

1. A weathering apparatus (20) into which at least one plug-in module radiation source (10) is insertable,
**characterized by**
a cavity (21) dimensioned to accommodate the plug-in module (10) space-fillingly and,
for mounting and locating a radiation source (3), a plug-in radiation source module (10) configured furthermore to be insertable from without into the cavity (21) provided therefor.

2. The weathering apparatus (20) as set forth in claim 1 wherein the cavity (21) is dimensioned so that it mounts a box-shaped plug-in module (10).

3. The weathering apparatus (20) as set forth in claim 1 or 2 wherein the cavity (21) is defined by a top wall, two opposite side walls and a rear wall bordering the top wall and the side walls, said rear wall being located opposite an opening through which the plug-in module (10) is insertable into the cavity (21).

4. The weathering apparatus (20) as set forth in any of the claims 1 to 3 comprising two electrical terminal contacts, especially receptacle contacts for contacting, especially by plugging-in the terminal contacts (7a, 7b) of the plug-in module (10).

5. The weathering apparatus (20) as set forth in claims 3 and 4 wherein the electrical terminal contacts (27) are arranged in the rear wall.

6. The weathering apparatus (20) as set forth in any of the claims 1 to 5 comprising an air cooling system configured whereby cooling air can be introduced into the inserted plug-in module (10) and whereby used cooling air can escape or be exhausted by the cooling air system.

7. The weathering apparatus (20) as set forth in in claim 6 further comprising an air inlet port connecting the cavity (21) and an air outlet port connecting the cavity (21).

8. The weathering apparatus (20) as set forth in claims 3 and 6 wherein the air inlet port and the air outlet port are formed in the top wall.

9. The weathering apparatus (20) as set forth in any of the claims 1 to 8, **characterized in that**
- the plug-in module (10) comprises a housing within which the radiation source (3) can be secured and electrically contacted, two electrical terminal contacts (7a, 7b) being applied to one end of the housing.

10. The weathering apparatus (20) as set forth in claim 9,
**characterized in that**
- the terminal contacts (7a, 7b) are formed by pin contacts (7a, 7b) extending from the rear end of the housing in a direction the same as the direction in which the plug-in module (10) is inserted.

11. The weathering apparatus (20) as set forth in any of the claims 1 to 10
**characterized in that**
- a handle is applied to the front end of the plug-in module (10) for inserting and withdrawing the plug-in module (10) into/from the weathering apparatus (20).

12. The weathering apparatus (20) as set forth in any of the claims 1 to 11,
**characterized in that**
- a radiation reflector (2) is integrated in the plug-in module (10).

13. The weathering apparatus (20) as set forth in in claim 9 or 10,
**characterized in that**
- the housing is box-shaped.

14. The weathering apparatus (20) as set forth in claim 12,
**characterized in that**
- the radiation reflector (2) is a curved sheet of metal secured within the housing box and the radiation source (3) is located within the plane of symmetry of the radiation reflector (2).

15. The weathering apparatus (20) as set forth in claim 9 or 10
**characterized in that**
- a portion of the housing is suitable for mounting a radiation filter (8, 9).

## Revendications

1. Dispositif d'exposition aux conditions atmosphériques (20) dans lequel au moins une unité de captage de sources de rayonnement (10) peut être insérée,
**caractérisé par**
une cavité (21), laquelle est dimensionnée de telle sorte qu'elle réceptionne l'unité de captage (10) de manière à remplir tout l'espace, et
une unité de captage de sources de rayonnement (10), laquelle est réalisée pour le captage et le maintien d'une source de rayonnement (3) et qui, de plus, est réalisée de manière à pouvoir être insérée de l'extérieur jusque dans la cavité prévue (21).

2. Dispositif d'exposition aux conditions atmosphériques (20) selon la revendication 1, dans lequel
la cavité (21) est dimensionnée de telle sorte qu'elle réceptionne une unité de captage (10) en forme de caisson.

3. Dispositif d'exposition aux conditions atmosphériques (20) selon l'une ou l'autre des revendications 1 et 2, dans lequel
la cavité (21) est limitée par une paroi de plafond, deux parois latérales adjacentes à la paroi de plafond et opposées l'une à l'autre et une paroi arrière adjacente à la paroi de plafond et aux parois latérales, ladite paroi arrière étant opposée à une ouverture à travers laquelle l'unité de captage (10) peut être insérée jusque dans la cavité (21).

4. Dispositif d'exposition aux conditions atmosphériques (20) selon l'une des revendications 1 à 3, comprenant deux contacts de connexion électriques (27), en particulier des douilles ou des ouvertures de connexion, avec lesquels les contacts de connexion électriques (7a, 7b) de l'unité de captage (10) peuvent être contactés, en particulier enfichés dans ceux-ci.

5. Dispositif d'exposition aux conditions atmosphériques (20) selon les revendications 3 et 4, dans lequel
les contacts de connexion électriques (27) sont agencés dans la paroi arrière.

6. Dispositif d'exposition aux conditions atmosphériques (20) selon l'une des revendications 1 à 5, comprenant un système de refroidissement à l'air, lequel est réalisé de telle sorte que l'air de refroidissement peut être introduit jusque dans l'unité de captage insérée (10) et de telle sorte que l'air de refroidissement usé peut s'échapper ou peut être aspiré par le système de refroidissement à l'air.

7. Dispositif d'exposition aux conditions atmosphériques (20) selon la revendication 6, présentant en outre une ouverture d'arrivée d'air, laquelle est en liaison avec la cavité (21), et une ouverture de sortie d'air, laquelle est en liaison avec la cavité (21).

8. Dispositif d'exposition aux conditions atmosphériques (20) selon les revendications 3 et 6, dans lequel
l'ouverture d'arrivée d'air et l'ouverture de sortie d'air sont ménagées dans la paroi de plafond.

9. Dispositif d'exposition aux conditions atmosphériques (20) selon l'une des revendications 1 à 8,
**caractérisé en ce que**
- l'unité de captage (10) présente un boîtier à l'intérieur duquel la source de rayonnement (3) peut être fixée et peut être contactée électriquement, sachant que deux contacts de connexion électriques (7a, 7b) sont montés sur un côté du boîtier.

10. Dispositif d'exposition aux conditions atmosphériques (20) selon la revendication 9,
**caractérisé en ce que**
- les contacts de connexion (7a, 7b) sont donnés par des goupilles de connexion (7a, 7b) qui s'étendent, en partant du côté arrière du boîtier, le long d'une direction qui correspond à la direction d'insertion de l'unité de captage (10).

11. Dispositif d'exposition aux conditions atmosphériques (20) selon l'une des revendications 1 à 10,
**caractérisé en ce que**
- une poignée (6) est montée sur le côté avant de l'unité de captage (10) pour insérer l'unité de captage (10) dans le dispositif d'exposition aux conditions atmosphériques (20) et l'extraire en dehors dudit dispositif.

12. Dispositif d'exposition aux conditions atmosphériques (20) selon l'une des revendications 1 à 11,
**caractérisé en ce que**
- un réflecteur de rayonnement (2) est intégré dans l'unité de captage (10).

13. Dispositif d'exposition aux conditions atmosphériques (20) selon l'une ou l'autre des revendications 9 et 10,
**caractérisé en ce que**
- le boîtier est réalisé en forme de caisson.

14. Dispositif d'exposition aux conditions atmosphériques (20) selon la revendication 12,
**caractérisé en ce que**
- le réflecteur de rayonnement (2) est fixé à l'intérieur du caisson de boîtier comme une surface métallique cintrée et **en ce que** la source de rayonnement (3) vient se placer à l'intérieur du plan de symétrie du réflecteur de rayonnement (2).

15. Dispositif d'exposition aux conditions atmosphériques (20) selon l'une ou l'autre des revendications 9 et 10,
**caractérisé en ce que**
- un filtre de rayonnement (8, 9) peut être mis en place sur un tronçon du boîtier.
